(19) Europäisches Patentamt
European Patent Office
Office européen des brevets

(11) **EP 2 518 488 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(51) Int Cl.:
***G01N 29/04*** *(2006.01)*     ***G01N 29/22*** *(2006.01)*
***G01N 29/26*** *(2006.01)*

(21) Anmeldenummer: **12002067.2**

(22) Anmeldetag: **23.03.2012**

(54) **Ultraschallprüfkopf und Verfahren zur zerstörungsfreien Prüfung eines flächig ausgebildeten Prüfkörpers**

Ultrasound probe and method for non-destructive testing of a flat test body

Tête de contrôle à ultrasons et procédé de contrôle sans destruction d'un échantillon plat

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2011 DE 102011018954**

(43) Veröffentlichungstag der Anmeldung:
**31.10.2012 Patentblatt 2012/44**

(73) Patentinhaber: **Fraunhofer-Gesellschaft zur Förderung der angewandten Forschung e.V.**
**80686 München (DE)**

(72) Erfinder:
- **BOTH, Norbert**
  **66636 Tholey (DE)**
- **NIESE, Frank**
  **66125 Saarbrücken (DE)**

(74) Vertreter: **Rösler, Uwe**
**Rösler Patentanwaltskanzlei**
**Landsberger Strasse 480a**
**81241 München (DE)**

(56) Entgegenhaltungen:
**DE-A1-102008 002 394**    **DE-B3-102004 063 482**
**US-A- 4 576 045**    **US-A1- 2006 027 022**
**US-B1- 6 250 163**

## Beschreibung

### Technisches Gebiet

Die Erfindung bezieht sich auf einen Ultraschallprüfkopf sowie ein Verfahren zur zerstörungsfreien Prüfung eines flächig ausgebildeten Prüfkörpers, wie eine Rohrwand, Platte oder ein Blech, der eine Vielzahl von Ultraschallwandlersegmenten vorsieht, die einzeln oder in Gruppen mittels Phased-Array Technik zum Aussenden von Ultraschallplattenwellen mit einer vorgebbaren Ausbreitungsrichtung in den zu prüfenden Prüfkörper ansteuerbar sind.

### Stand der Technik

Ultraschallprüfköpfe der vorstehend genannten Gattung werden zur zerstörungsfreien Prüfung an ausgedehnten Prüfobjekten eingesetzt, um beispielsweise Risse oder anderweitige Materialdefekte in Prüfkörpern bzw. Prüfkörperwänden zu detektieren. Insbesondere bei der Überprüfung von Schweißnähten gilt es, die Ultraschallwellen möglichst mit einem geneigten Winkel relativ zur Schweißnaht einzuschallen, um auf diese Weise Schweißnahtdefekte entweder im Rahmen einer Reflexions-, Beugungs- oder einer Transmissionsmessung zu erfassen.

Neben einer Einschallung der Ultraschallsignale in eine zu untersuchende Prüfkörperwand unter einem fest vorgegebenen Einschallwinkel, durch den es erforderlich ist, zur Erfassung der gesamten Schweißnahtgeometrie den hierfür eingesetzten Ultraschallprüfkopf relativ zur Schweißnaht zu bewegen, sind Ultraschallprüfköpfe bekannt und im Einsatz, die auf der Grundlage der Phased-Array-Technik eine Variation des Einschallwinkels der Ultraschallwellen während der Prüfung ermöglichen. Mit dieser elektronischen Schwenktechnik, mit der die Hauptausbreitungsrichtung des in den Prüfkörper einkoppelbaren Ultraschallwellenfeld geschwenkt werden kann, können auf Prüfkopfbewegungen in Richtung der Schweißnaht verzichtet bzw. minimiert werden, wodurch zerstörungsfreie Ultraschalluntersuchungen an Prüfkörpern schneller und somit wirtschaftlicher durchgeführt werden können.

Ultraschallprüfköpfe oder auch als Gruppenstrahlprüfkopf bezeichnet, die für den Einsatz der Phased-Array-Technik geeignet sind, bestehen aus einer Vielzahl einzeln ansteuerbarer Ultraschallwellen erzeugender Ultraschallwellenwandlersegmente. Die einzelnen zu einem Gruppenstrahlprüfkopf zusammengefassten Ultraschallwellen erzeugenden Segmente werden im Sendefall unterschiedlich angesteuert bzw. im Empfangsfall unterschiedlich ausgelesen. In den meisten Fällen erfolgt die unterschiedliche Ansteuerung der einzelnen Segmente durch eine individuelle Amplituden- und/oder Phasenbelegung bzw. durch eine zeitverzögerte Ansteuerung, um eine Winkeleinschallung oder eine Fokussierung des sich durch Überlagerung der von den Ultraschallwandlersegmenten ausgehenden Einzelfelder ergebenden, gesamtheitlich von dem Gruppenstrahlprüfkopf abgestrahlten Ultraschallwellenfeldes zu erreichen.

In räumlich begrenzten zu untersuchenden Prüfkörpern, wie beispielsweise Blechen oder plattenförmigen Prüfkörpern, können sich so genannte Ultraschall-Plattenwellen ausbilden, deren Ausbreitungsrichtung parallel zur Plattenoberfläche orientiert ist und deren Ultraschallwellenlänge in der Größenordnung der Plattendicke liegt. Zur Anregung sowie auch zum Empfang derartiger Ultraschall-Plattenwellen können neben klassischen piezoelektrischen Winkelprüfköpfen auch elektromagnetische Ultraschallwandler eingesetzt werden, mit denen eine selektive Anregung ausgewählter Plattenwellenmoden sowie auch Plattenwellen mit einer SH-Polarisation möglich ist. Letztere betreffen Scherwellen, die parallel zur Wandoberfläche polarisiert sind - daher auch die Bezeichnung "horizontal polarisierte Scherwellen" oder für den Fall der Plattenwellen als "horizontal polarisierte Plattenwellen" bezeichnet werden.

Um in einem voluminös ausgedehnten Prüfobjekt einen bestimmte Einschallrichtung einzustellen, kann auf die bekannte Phased-Array-Technik zurückgegriffen werden. Dabei werden segmentierte Ultraschallprüfköpfe eingesetzt, die mit einer geeigneten Elektronik phasengerichtet angesteuert werden können. Dieser Ansatz kann auch auf die Anregung von Ultraschallplattenwellenmoden eingesetzt werden. Dadurch ist es möglich, wenn die Abstrahlrichtung der Segmente senkrecht zur linearen Anordnung der Segmente ausgerichtet ist, die Abstrahlrichtung des Ultraschallsummensignals durch eine phasengerichtete Ansteuerung in der Plattenebene zu drehen, siehe P. Wilcox, M. Lowe and P. Cawley: Lamb and SH Wave Transducer Arrays for the Inspection of Large Areas of Thick Plates, in Review of Progress in QNDE 2000, 19, S. 1049-1056. Problematisch ist jedoch, dass der Schwenkbereich des Ultraschallwellenfeldes durch die Aperturbreite jedes einzelnen Ultraschallwandlersegmentes begrenzt ist.

Die Druckschrift DE 10 2004 063 482 B3 beschreibt eine Anordnung zur Einschallung von US-Scherwellen in einen rohr- oder plattenförmigen, ferromagnetischen Prüfkörper zu dessen Rissüberprüfung. Sowohl das Aussenden als auch der Empfang der US-Scherwellen erfolgt mit Hilfe einer HF-Spulenanordnung, die auf dem Prüfkörper aufgebracht ist, der im Bereich der HF-Spulenanordnung vormagnetisiert ist.

Die DE 10 2004 053 584 A1 offenbart eine zerstörungsfreie Materialprüfung mittels Ultraschall, bei der EMUS-Wandler zur Erzeugung senkrecht zur Prüfkörperoberfläche in den Prüfkörper abstrahlbare Ultraschallwellen eingesetzt werden.

Schließlich beschreibt die DE 10 2008 002 394 A1 einen universellen Ultraschallprüfkopf zur Abschallung von parallel zur Prüfkörperoberfläche sich innerhalb eines Prüfkörpers ausbreitenden Ultraschallwellen, vornehmlich zur Untersuchung von Schweißschmelzzonen.

Der Prüfkopf ist ringförmig ausgebildet und verfügt über segmentiert getrennte Bereiche zur Abschallung sowie für den Empfang von Ultraschallwellen.

Die Druckschrift DE 10 2008 002 394 A1 beschreibt einen universellen Prüfkopf zur zerstörungsfreien Ultraschalluntersuchung, der in konzentrischer Anordnung eine Vielzahl einzelner Ultraschallwandler vorsieht. Die Vielzahl konzentrisch und radial angeordneter Ultraschallwandler ist in so genannte Sub-Arrays unterteilt, wobei ausschließlich Ultraschallwandler innerhalb eines Sub-Arrays mittels Phased-Array-Technik angesteuert werden, so dass sich die von den einzelnen Ultraschallwandlern abgestrahlten Einzelwellenfeldern in Form einer Lamb-Welle mit einer vorgebbaren zur Werkstückoberfläche geneigten Schallausbreitungsrichtung überlagern. Die Lamp-Welle weist hierbei eine Hauptausbreitungsrichtung in Richtung des Mittelpunktes der konzentrischen, ringsegmentförmig angeordneten und ausgebildeten Ultraschallwandler auf.

Die Druckschrift US 4,576,045 beschreibt einen Ultraschallprüfkopf mit einer Vielzahl von längs einer konvexen Kontur angeordneten Ultraschallwandler-Teilelementen. Gruppen von aufeinander folgenden Teilelementen bilden ein Aussenden/Empfangen-Element, und Gruppen von Aussenden/Empfangen-Elementen werden mittels Phased-Array-Technik derart angesteuert, dass sie einen Vektor bilden. Die Vielzahl von Vektoren bildet ein divergentes Ultraschallwellenfeld.

**Darstellung der Erfindung**

Der Erfindung liegt die Aufgabe zugrunde, einen Ultraschallprüfkopf zur zerstörungsfreien Prüfung eines flächig ausgebildeten Prüfkörpers, wie eine Rohrwand, Platte oder ein Blech, mit einem Ultraschallprüfkopf, der eine Vielzahl von Ultraschallwandlersegmenten vorsieht, die einzeln oder in Gruppen mittels Phased-Array-Technik zumindest zum Aussenden von Ultraschall-Plattenwellen mit einer vorgebbaren Ausbreitungsrichtung in den zu prüfenden Prüfkörper ansteuerbar sind, derart weiterzubilden, dass der Schwenkbereich, innerhalb dem die Ultraschall-Plattenwellen mit vorgebbarer Ausbreitungsrichtung erzeugbar sind, vergrößert werden soll. Die Vergrößerung des Schwenkbereiches soll mit technisch möglichst einfachen und kostengünstig zu realisierenden Mitteln realisierbar sein.

Die Lösung der der Erfindung zugrunde liegenden Aufgabe ist im Anspruch 1 angegeben. Ferner wird im Anspruch 10 ein lösungsgemäßes Verfahren zur zerstörungsfreien Prüfung eines flächig ausgebildeten Prüfkörpers, wie eine Rohrwand, Platte oder ein Blech, angegeben. Den Erfindungsgedanken in vorteilhafter Weise weiterbildende Merkmale sind Gegenstand der Unteransprüche sowie der weiteren Beschreibung, insbesondere unter Bezugnahme auf die Ausführungsbeispiele zu entnehmen.

Lösungsgemäß ist ein Ultraschallprüfkopf zur zerstörungsfreien Prüfung eines flächig ausgebildeten Prüfkörpers, wie eine Rohrwand, Platte oder ein Blech, mit einem Ultraschallprüfkopf, der eine Vielzahl von Ultraschallwandlersegmenten vorsieht, die einzeln oder in Gruppen mittels Phased-Array-Technik zumindest zum Aussenden von Ultraschall-Plattenwellen mit einer vorgebbaren Ausbreitungsrichtung in den zu prüfenden Prüfkörper ansteuerbar sind, dadurch ausgebildet, dass die Ultraschallwandlersegmente aus wenigstens zwei Segmentteilen bestehen, von denen jeweils ein Ultraschall-Plattenwellenfeld in den flächig ausgebildeten Prüfkörper abstrahlbar ist und die im Wege der Phased-Array-Technik gemeinsam, d.h. zeitgleich ansteuerbar sind, und dass die wenigstens zwei Segmentteile längs einer gemeinsamen Ebene, zeilenförmig nebeneinander derart angeordnet sind, dass sich die den wenigstens zwei Segmenten zuordenbaren Ultraschallwellenfelder gegenseitig überlagern und jeweils eine Hauptausbreitungsrichtung besitzen, die in Projektion auf die Ebene einen spitzen Winkel $\alpha$ einschließen.

Die der Erfindung zugrunde liegende Idee rückt von der bisherigen baulichen Ausgestaltungsweise der einzelnen Ultraschallwandlersegmente ab, und schlägt lösungsgemäß vor, die jeweils als eine Baueinheit ausgebildeten Ultraschallwandlersegmente in wenigstens zwei Hälften aufzuspalten, d.h. in wenigstens zwei räumlich getrennte Baueinheiten zu separieren, von denen jeweils ein Ultraschallwellenfeld erzeugt wird bzw. ausgeht. Beide Hälften eines Ultraschallwandlersegmentes, d.h. beide Segmentteile sind in einer gemeinsamen Ebene angeordnet und schließen dabei einen spitzen Winkel zueinander ein, so dass die von beiden Segmentteilen ausgehenden Ultraschall-Plattenwellenfelder jeweils eine Hauptausbreitungsrichtung besitzen, die gleichsam den spitzen Winkel zueinander einschließen. Die von beiden Segmentteilen erzeugten Ultraschall-Plattenwellenfelder überlagern sich zu einem Ultraschall-Plattenwellenfeld mit einem Divergenzwinkel, der größer ist als der Divergenzwinkel bzw. Öffnungswinkel eines Ultraschallwellenfeldes, das von einem nicht geteilten, bisher üblichen Ultraschallwandlersegment ausgeht.

Durch die lösungsgemäße Maßnahme der Aufteilung eines Ultraschallwandlersegmentes in wenigstens zwei Teile, die nicht parallel, sondern in einem spitzen Winkel zueinander angeordnet sind, kann der Schwenkbereich des Phased-Array-Ultraschallprüfkopfs zur Aussendung von Ultraschall-Plattenwellen vergrößert werden, wodurch sich auch das Anwendungsspektrum derartiger Ultraschallprüfköpfe erweitert.

Selbstverständlich ist die lösungsgemäße Maßnahme sowohl für piezoelektrische sowie auch für elektromagnetische Ultraschwallwandler anwendbar. Auch ist eine Unterteilung eines bisher üblichen Ultraschallwandlersegmentes in zwei Teile für die Umsetzung des lösungsgemäßen Gedankens nicht limitierend, vielmehr lässt sich die Abstrahldivergenz eines Ultraschallwandlersegmentes weiter vergrößern, indem das Ultraschallwandlersegment in drei, vier oder mehr Segmentteile aufgeteilt wird, die vorzugsweise untereinander eine identische bauliche Ausgestaltung annehmen sollen und bei denen jeweils zwei benachbart in einer Ebene angebrachte Segmentteile einen spitzen Winkel $\alpha$ einschließen, wobei der Winkel $\alpha$ grundsätzlich $0° < \alpha < 90°$ zu betragen hat, jedoch vorzugsweise $< 60°$, besonders vorzugsweise $< 15°$ betragen soll.

Im Weiteren wird davon ausgegangen, dass eine bevorzugte Ausführungsform die Unterteilung eines Ultraschallwandlersegmentes in jeweils zwei gleich große Segmentteile vorsieht, d.h. in ein so genanntes Segmentteile-Paar, das im lösungsgemäßen Sinne einen spitzen Winkel $\alpha$ gemeinsam einschließt.

Eine bevorzugte Ausführungsform eines lösungsgemäßen Ultraschallprüfkopfes sieht eine zeilenförmige Anordnung einer Vielzahl von Segmentteile-Paaren vor, deren zuordenbare Sende- und/oder Empfangsaperturen dem gleichen Halbraum zugewandt sind. Zur Ansteuerung bzw. Aktivierung der einzelnen Segmentteil-Paare werden diese im Rahmen der Phased-Array-Technik vorzugsweise in gleicher Weise angesteuert bzw. aktiviert, wie dies auch bei herkömmlichen Gruppenstrahlern der Fall ist, d.h. jeweils beide Hälften eines Segmentteile-Paares werden simultan, d.h. zeitgleich, aktiviert, wohingegen jeweils benachbart angeordnete Segmentteile-Paare unter Zugrundelegung der Phased-Array-Technik, beispielsweise phasen- oder zeitverzögert angesteuert werden. Im Ergebnis wird von dem lösungsgemäß ausgebildeten Ultraschallprüfkopf, d.h. von der Summe aller nebeneinander angeordneten Segmentteile-Paaren, ein Gesamtultraschall-Plattenwellenfeld abgestrahlt, das sich als Überlagerungsfeld von sämtlichen Einzelwellenfeldern der Segmentteile-Paaren zusammensetzt und unter einem vorgebbaren Abstrahlwinkel oder unter Zugrundelegung eines vorgebbaren Fokusbereiches ausbreitet.

Je nach Anordnung und Ausbildung des Ultraschallprüfkopfes können mit der lösungsgemäßen Anordnung sowohl Ultraschallplattenwellenfelder erzeugt oder empfangen werden

Das der lösungsgemäßen Vorrichtung zugrunde liegende Verfahrensprinzip zeichnet sich dadurch aus, dass von wenigstens einem Ultraschallwandlersegment wenigstens zwei separate, in räumliche Überlagerung miteinander tretende Ultraschallwellenfelder ausgesendet und/oder empfangen werden, dem jeweils eine Hauptausbreitungsrichtung zuordenbar ist, die miteinander einen spitzen Winkel $\alpha$ einschließen.

Das vorstehend beschriebene, wenigstens eine Ultraschallwandlersegment ist im lösungsgemäßen Sinne als "Ereignisort" für die Ausbildung bzw. Entstehung wenigstens zweier, separater und in räumliche Überlagerung miteinander tretende Ultraschallwellenfelder zu verstehen, zumal es für das lösungsgemäße Verfahrensprinzip nicht zwingend erforderlich ist, ob das körperlich ausgebildete Ultraschallwandlersegment ein-, zwei- oder mehrteilig gestaltet ist. Wesentlich ist, dass von dem Ort eines Ultraschallwandlersegmentes innerhalb einer Vielzahl angeordneter Ultraschallwandlersegmente, mit denen auf der Grundlage der Phased-Array-Technik ein Ultraschall-Plattenwellenfeld mit vorgebbarer Ausbreitungsrichtung erzeugt werden kann, wenigstens zwei separate, aber in räumliche Überlagerung tretende Ultraschallplattenwellenfelder ausgehen, denen jeweils eine Hauptausbreitungsrichtung zuordenbar ist, die ihrerseits miteinander einen spitzen Winkel $\alpha$ einschließen. Um diese Forderung mit möglichst einfachen technischen Mitteln zu realisieren, wird die vorstehende Separierung eines Ultraschallwandlersegmentes in wenigstens zwei Hälften vorgeschlagen. Denkbar wären sicherlich alternative aber technisch aufwendiger zu realisierende Maßnahmen.

Mit Hilfe der lösungsgemäßen Methodik vergrößert sich nicht nur die Abstrahldivergenz der vom jedem "Ereignisort" abgestrahlten Ultraschallplattenwellenfelder im Vergleich zur bisherigen Praxis und Ausbildung von Ultraschallgruppenstrahlprüfköpfen, insbesondere vergrößert sich die AbstrahlDivergenz des gesamtheitlich von allen "Ereignisorten" abgestrahlten Ultraschallplattenwellenfeldes. Hierdurch kann letztlich der Schwenkbereich, innerhalb dem die Hauptausbreitungsrichtung des Gesamtultraschall-Plattenwellenfeldes variiert werden kann, in lösungsgemäßer Weise vergrößert werden.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1a, b      Illustration eines an sich bekannten Ultraschallprüfkopfes zur Erzeugung von Ultraschall-Plattenwellen sowie Darstellung eines Ultraschallwandlersegmentes,

Fig. 2a, b      lösungsgemäße Anordnung zweier Segmentteile-Paare bzw. einer Vielzahl von Segment-Paaren,

Fig. 3      Ausführungsform eines Segmentteile-Paares auf Basis eines elektromagnetischen Ultraschallwandlers, sowie

Fig. 4a,b      alternative Ausgestaltung eines Segmentteile-Paares auf Basis eines elektromagnetischen Ultraschallwandlers.

## Wege zur Ausführung der Erfindung, gewerbliche Verwendbarkeit

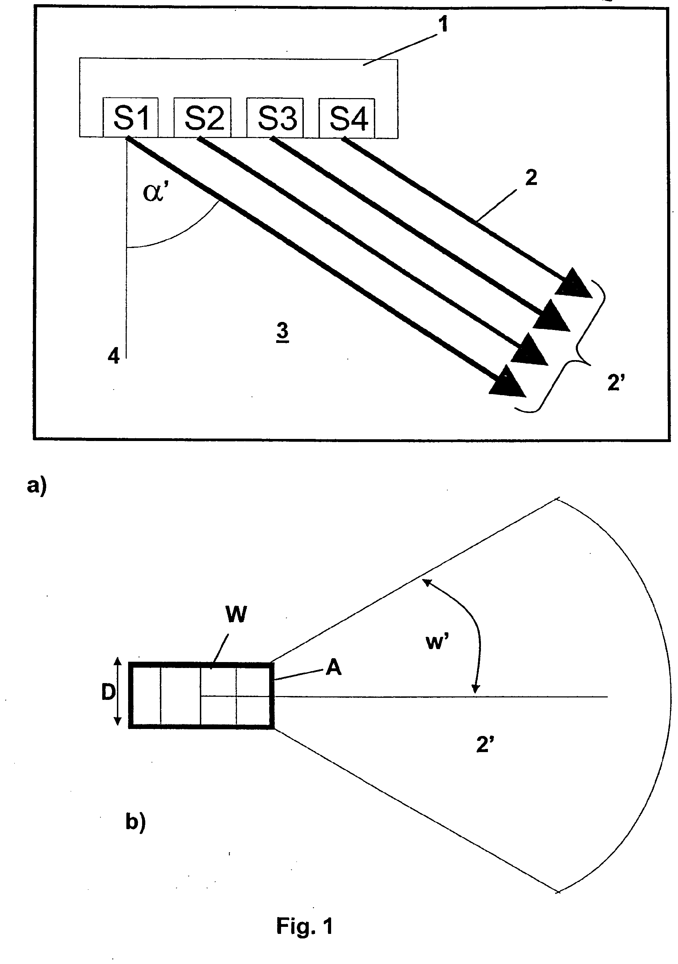

In Fig. 1a ist eine schematisierte Darstellung zur Illustration eines an sich bekannten Ultraschallprüfkopfes 1 gezeigt, der über vier Ultraschallwandlersegmente S1, S2, S3 und S4 verfügt. Die vier Ultraschallwandlersegmente S1 bis S4 sind zur Erzeugung von Ultraschall-Plattenwellen 2 ausgebildet, die sich im gezeigten Ausführungsbeispiel innerhalb einer Prüfkörperwand 3, die mit der Zeichenebene von Fig. 1a zusammenfällt, auszubreiten vermögen.

Die einzelnen Ultraschallwandlersegmente S1 bis S4 werden mittels Phased-Array-Technik in geeigneter Weise phasen- bzw. zeitverzögert angesteuert, um auf diese Weise ein Ultraschall-Plattenwellenfeld 2' zu erhalten, dessen Hauptausbreitungsrichtung relativ zur unbeeinflussten Ausbreitungsrichtung 4 der einzelnen Ultraschallwandlersegmente S1 bis S4 um den Schwenkwinkel a' geschwenkt ist.

Jedes der einzelnen in Fig. 1a ersichtlichen Ultraschallwandlersegmente S1 bis S4 verfügt über einen Wandlerkörper W, siehe Fig. 1b, dem eine stirnseitige Austritts-/Empfangsapertur A mit einer Aperturbreite D zugeordnet ist, die für gewöhnlich der Wandlerbreite entspricht. Das Ultraschallwandlersegment W kann sowohl in Form eines Piezowandlers als auch als elektromagnetischer Ultraschallwandler (EMUS-Wandler) ausgebildet sein. Stirnseitig über die Austrittsapertur A wird ein Ultraschall-Plattenwellenfeld 2' abgestrahlt bzw. innerhalb einer Prüfkörperwand erzeugt, das über einen Öffnungswinkel w', der die Abstrahldivergenz des Ultraschallwandlersegmentes W vorgibt, verfügt.

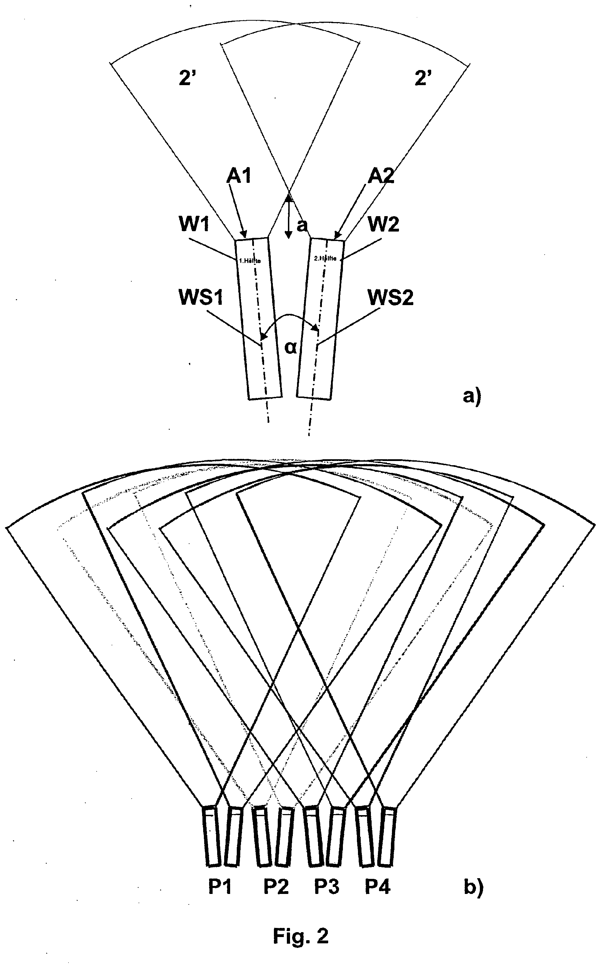

Die Abstrahldivergenz w' des Ultraschallwandlersegmentes W ist unter anderem von der Ultraschallwellenfrequenz sowie der Aperturbreite D begrenzt. Durch die Begrenzung des Divergenzbereiches ist zugleich auch der maximal mögliche Schwenkbereich eines aus einer Vielzahl von Ultraschallwandlersegmenten zusammengesetzten Ultraschallprüfkopfes vorgegeben, der mittels Phased-Array-Technik betrieben wird. Um den Schwenkbereich eines derartigen Phased-Array-Ultraschall-Plattenwellen-Prüfkopfes zu erweitern und diesen damit für ein breiteres Anwendungsspektrum zugänglich zu machen, wird lösungsgemäß vorgeschlagen, das in Fig. 1b als einheitliches Bauelement ausgebildete Ultraschallwandlersegment in wenigstens zwei Hälften aufzuspalten, die nicht parallel, sondern in einem spitzen Winkel zueinander angeordnet sind. Dies illustriert die schematische Darstellung in Fig. 2a, die zwei Segmentteile W1 und W2 eines Ultraschallwandlersegmentes zeigt, die untereinander baugleich ausgebildet sind und mit ihrer Segmentlängserstreckung WS1, WS2 einen spitzen Winkel α einschließen. Die beiden Segmentteile W1, W2 verfügen jeweils über eine Austrittsapertur A1, A2, die jeweils in Summe der Austrittsapertur eines ungeteilten Ultraschallwandlersegmentes gemäß Fig. 1b entsprechen. Beide Segmentteile W1 und W2 sind in einer gemeinsamen Ebene, die in Fig. 2a der Zeichenebene entspricht, nebeneinander liegend angeordnet und schließen mit ihren jeweiligen Segmentlängserstreckungen den spitzen Winkel α ein, der grundsätzlich in einem Winkelbereich zwischen 0° und 90° liegt. Vorzugsweise jedoch ist der Winkel < 60°, besonders vorzugsweise < 15° zu wählen. Die Wahl des Winkels α ist insbesondere derart vorzunehmen, so dass die Ultraschall-Plattenwellenfelder 2', die von beiden Segmentteilen W1 und W2 abgestrahlt werden, in gegenseitige Überlappung treten, so dass in einem Mindestabstand a zu den Austrittsaperturen A1, A2 eine Überlagerung beider Wellenfelder erfolgt.

Durch die lösungsgemäße Anordnung der wenigstens zwei Segmentteile W1, W2 vergrößert sich der Divergenzbereich des in Überlagerung tretenden Gesamtultraschall-Plattenwellenfeldes beider Segmentteile W1, W2, im Vergleich zu einem einzigen, an sich bekannten Ultraschallwandlersegment gemäß Fig. 1b, wodurch sich zugleich auch der maximale Schwenkbereich eines aus einer Vielzahl derartig aufgeteilter Ultraschallwandlersegmente bestehenden Ultraschallprüfkopfes vergrößert. Dies ist schematisiert in Fig. 2b dargestellt. Fig. 2b zeigt vier Segmentteile-Paare P1, P2, P3, P4, die jeweils einem Ultraschallwandlersegment S1, S2, S3, S4 in dem in Fig. 1 dargestellten Ultraschallprüfkopf 1 entsprechen. Die vier in Fig. 2b dargestellten Segmentteile-Paare P1 bis P4 weisen jeweils zwei gekippt zueinander angeordnete Segmentteile W1, W2 gemäß der in Fig. 2a illustrierten Darstellung auf und erzeugen ein durch Überlagerung sämtlicher Einzel-Ultraschall-Plattenwellenfelder gesamtheitliches Ultraschall-Plattenwellenfeld, dessen Gesamtdivergenz größer ist als jenes, das von den vier Ultraschallwandlersegmenten S1 bis S4 erzeugt wird, wodurch auch der gesamte Schwenkbereich, der mit Hilfe der Phased-Array-Technik einstellbar ist, vergrößert werden kann.

Die in Fig. 2b dargestellten Segmentteile-Paare P1 bis P4 sind in einer gemeinsamen Ebene, die der Zeichenebene in Fig. 2b entspricht, unmittelbar nebeneinander liegend angeordnet, wobei sich ihre Austrittsaperturen in einer gemeinsamen Ebene befinden.

Die vorstehenden Erläuterungen bezogen sich auf Ultraschallwandlersegmente, die lediglich zum Aussenden von Ultraschall-Plattenwellenfeldern geeignet sind. Selbstverständlich können die einzelnen Segmentteile-Paare P1 bis P4 auch zugleich oder alternativ nur ausschließlich für das Empfangen von Ultraschall-Plattenwellenfelder eingesetzt werden.

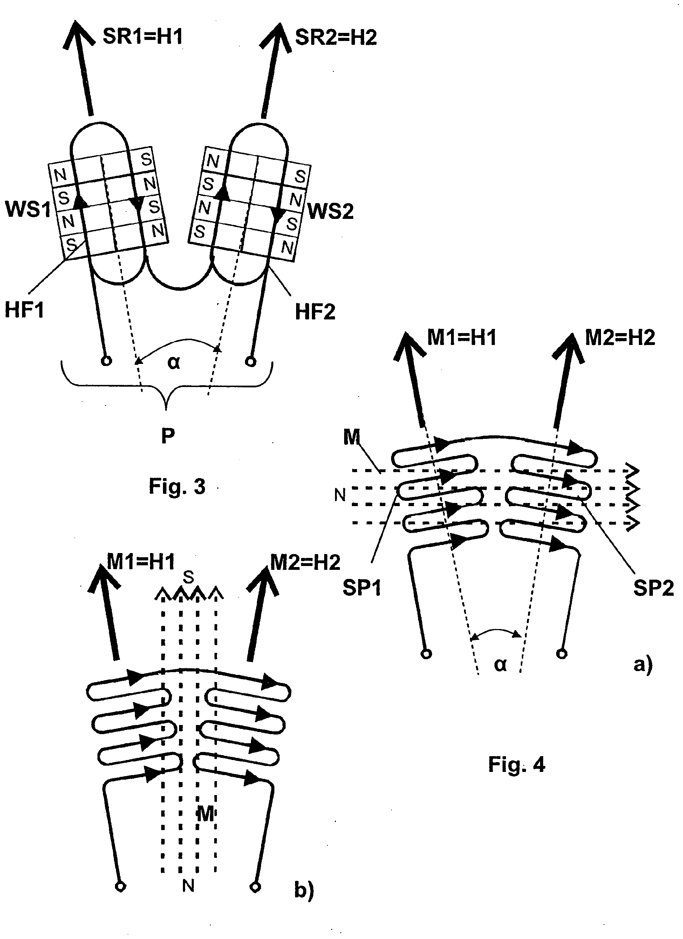

Wie bereits erwähnt ist es möglich, die zwei Segmentteile W1, W2 gemäß Fig. 2a sowohl als Piezowandler oder als elektromagnetische Ultraschallwandler auszubilden. In Fig. 3 ist eine Ausführungsform zweier Segmentteile WS1, WS2 auf Basis eines elektromagnetischen Ultraschallwandlerprinzips erläutert. Jedes einzelne Segmentteil WS1, WS2 weist ein Permanentmagnet-Array auf, das eine Vielzahl stapelförmig unmittelbar aneinander gefügte Einzelstabmagnete mit jeweils in Stapelrichtung SR1, SR2 abwechselnden Magnetpolungen vorsieht. Beide Segmentteile WS1, WS2 sind bezüglich ihrer beiden Stapelrichtungen SR1, SR2 gekippt zueinander angeordnet und schließen den spitzen Winkel α ein. Zusätzlich sieht jedes Segmentteil WS1, WS2 eine HF-Spulenanordnung HF1, HF2 vor, die beide in Serie zusammengeschaltet sind und somit einheitlich, d.h. zeitgleich zur Erzeugung bzw. zum Empfang von Ultraschall-Plattenwellen ansteuerbar sind. Durch die gegenseitig gekippte Anordnung beider Permanentmagnet-Arrays schließen zugleich auch die Hauptabstrahlrichtungen H1, H2 beider Segmentteile WS1, WS2, längs denen die Ultraschall-Plattenwellen abstrahlbar sind, den Winkel $\alpha$ ein, wodurch die Abstrahldivergenz des illustrierten Segmentteile-Paares P in der vorstehend erläuterten Weise vergrößert wird.

Ein weiteres Ausführungsbeispiel für die Ausbildung eines elektromagnetischen Ultraschallwandlers ist in Fig. 4a illustriert. In diesem Fall besteht jedes Segmentteil aus einem mäanderförmigen HF-Spulensystem SP1, SP2, das jeweils eine Vielzahl längs einer Mäanderrichtung M1, M2 angeordnete Spulenschlingen SP1, SP2 aufweist. Die Mäanderrichtungen M1, M2 schließen hierbei den spitzen Winkel $\alpha$ ein. Beide mäanderförmig ausgebildeten Spulen SP1, SP2 sind ebenfalls in Serie zusammengeschaltet und daher gleichzeitig ansteuerbar.

Zudem ist eine Permanentmagnet-Anordnung vorgesehen, die ein stationäres oder quasi stationäres, jedoch parallel zur Oberfläche einer Prüfkörperwand orientiertes Magentfeld M am Ort bzw. im Bereich der mäanderförmig ausgebildeten HF-Spulenanordnungen SP1, SP2 erzeugt. Im Falle des in Fig. 4a illustrierten Ausführungsbeispiels sind die Magnetfeldlinien des Permanentmagnetfeldes M weitgehend senkrecht zu M1 und M2 orientiert, d.h. sie schließen mit den Mäanderrichtungen M1, M2 einen Winkel von 90° $\pm$ $\alpha/2$ ein.

Im Gegensatz dazu ist das Permanentmagnetfeld M im Ausführungsbeispiel gemäß Fig. 4b, das gleichsam zwei in Serie zusammen geschaltete mäanderförmig ausgebildete HF-Spulenanordnungen SP1, SP2 aufweist, weitgehend parallel zu den Mäanderrichtungen M1, M2 ausgerichtet, insbesondere schließen die Magnetfeldlinien mit den Mäanderrichtungen M1, M2 einen Winkel von $\pm a/2$ ein. Durch eine derartige Anordnung werden in der Prüfkörperwand bevorzugt Lamb-Wellen-Moden angeregt, wohingegen das Ausführungsbeispiel gemäß Fig. 4a bevorzugt SH-Wellen-Moden erzeugt.

**Bezugszeichenliste**

| 1 | Ultraschallprüfkopf |
| 2 | Ultraschall-Plattenwellen |
| 2' | Ultraschall-Plattenwellenfeld |
| 3 | Prüfkörperwand |
| 4 | Ursprüngliche Ausbreitungsrichtung |
| WS1, WS2 | Segment-Teil |
| W | Ultraschallwandlersegment |
| D | Aperturbreite, Wandlerbreite |
| A | Apertur, |
| w' | Öffnungswinkel, Divergenz |
| SP1, SP2 | Mäanderförmige HF-Spulenanordnung |
| M1,M2 | Mäanderrichtung |
| H1,H2 | Hauptschallabstrahlrichtung |

| SR1, SR2 | Stapelrichtung |
| P1, ..., P4 | Segmentteile-Paar |
| P | Segmentteile-Paar |

**Patentansprüche**

1.  Ultraschallprüfkopf zur zerstörungsfreien Prüfung eines flächig ausgebildeten Prüfkörpers, vorzugsweise einer Prüfkörperwand (3), wie Rohr- oder Plattenwände oder ein Blech, der eine Vielzahl von Ultraschallwandlersegmenten (W) vorsieht, die einzeln oder in Gruppen mittels Phased-Array-Technik zum Aussenden von Ultraschallplattenwellen (2, 2') mit einer vorgebbaren Ausbreitungsrichtung in die zu prüfende Prüfkörperwand (3) ansteuerbar sind, **dadurch gekennzeichnet, dass** die Ultraschallwandlersegmente (W) jeweils aus wenigstens zwei Segmentteilen (WS1, WS2) mit jeweils einer Austrittsapertur bestehen,
dass über die Austrittsaperturen der wenigstens zwei Segmentteile (WS1, WS2) jeweils ein Ultraschallplattenwellenfeld (2, 2') abstrahlbar ist,
dass die wenigstens zwei Segmentteile (WS1, WS2) pro Ultraschallwandlersegment jeweils im Wege der Phased-Array-Technik gemeinsam und zeitgleich ansteuerbar sind, und dass die Ultraschallwandlersegmente (W) längs einer gemeinsamen Ebene derart zeilenförmig nebeneinander angeordnet sind, dass die den Ultraschallwandlersegmenten (W) zuordenbaren Austrittaperturen einem gleichen Halbraum zugewandt sind und sich die den wenigstens zwei Segmentteilen (WS1, WS2) zuordenbaren Ultraschallplattenwellenfelder (2, 2') gegenseitig überlagern und jeweils eine Hauptausbreitungsrichtung besitzen, die in Projektion auf die Ebene einen spitzen Winkel $\alpha$ derart einschließen, dass sich die von den wenigstens zwei Segmentteilen (WS1, WS2) erzeugten Ultraschall-Plattenwellenfelder (2, 2') zu einem Ultraschall-Plattenwellenfeld mit einem Divergenzwinkel überlagern, der größer ist als ein Divergenzwinkel (w') eines Ultraschallwellenfeldes, das von einem nicht geteilten Ultraschallwandlersegment (W) ausgehen würde.

2.  Ultraschallprüfkopf nach Anspruch 1, **dadurch gekennzeichnet, dass** die wenigstens zwei Segmentteile (WS1, WS2), die jeweils über einer Segmentlängserstreckung verfügen, baugleich ausgebildet und räumlich getrennt nebeneinander in der Ebene derart angeordnet sind, dass die Segmentlängserstreckung jeweils beider Segmentteile (WS1, WS2) den Winkel $\alpha$ einschließen.

3.  Ultraschallprüfkopf nach Anspruch 1 oder 2, **dadurch gekennzeichnet, dass** die Ultraschallwandlersegmente (W) zum Aussenden und / oder Empfangen von Ultraschallplattenwellen ausgebildet sind.

4. Ultraschallprüfkopf nach einem der Ansprüche 1 bis 3,
**dadurch gekennzeichnet, dass** die Ultraschallwandlersegmente (W) piezoelektrisches Material zur Ultraschallwandlung aufweisen,
dass die wenigstens zwei Segmentteile (WS1, WS2) jeweils einen aus piezoelektrischem Material bestehenden Wandlerkörper mit einer Körperlängserstreckung vorsehen, und
dass jeweils ein keilförmiges Koppelelement vorhanden ist, über das der Wandlerkörper auf die Prüfkörperwand (3) anlegbar ist, und dass die Körperlängserstreckungen beider Wandlerkörper den spitzen Winkel α einschließen.

5. Ultraschallprüfkopf nach einem der Ansprüche 1 bis 3,
**dadurch gekennzeichnet, dass** die Ultraschallwandlersegmente (W) als elektromagnetische Ultraschallwandler (EMUS) ausgebildet sind.

6. Ultraschallprüfkopf nach Anspruch 5,
**dadurch gekennzeichnet, dass** die wenigstens zwei Segmentteile (WS1, WS2) jeweils eine Permanentmagnetanordnung aufweisen, die aus einer Vielzahl stapelförmig unmittelbar einander gefügter Einzelstabmagnete mit jeweils sich in Stapelrichtung abwechselnden Magnetpolungen besteht,
dass den Permanentmagnetanordnungen jeweils eine HF-Spulenanordnung (HF1, HF2) zugeordnet ist, die jeweils in Serie zusammengeschaltet sind, und dass die Stapelrichtungen beider Permanentmagnetanordnungen den spitzen Winkel α einschließen.

7. Ultraschallprüfkopf nach Anspruch 5,
**dadurch gekennzeichnet, dass** die wenigstens zwei Segmentteile (WS1, WS2) jeweils eine mäanderförmig ausgebildete HF-Spulenanordnung (SP1, SP2) vorsieht, mit einer Vielzahl längs einer Mäanderrichtung angeordneter Spulenschlingen, dass die Mäanderrichtungen beider HF-Spulenanordnungen (SP1, SP2) den spitzen Winkel α einschließen, dass die HF-Spulenanordnungen (SP1, SP2) beider Segmentteile (WS1, WS2) seriell oder parallel zusammengeschaltet sind, und
dass eine Magnetanordnung zur Einprägung eines stationären oder quasistationären, parallel zur Oberfläche der Prüfkörperwand (3) orientierten Magnetfeldes am Ort der mäanderförmig ausgebildeten HF-Spulenanordnungen (SP1, SP2) angeordnet ist.

8. Ultraschallprüfkopf nach Anspruch 7,
**dadurch gekennzeichnet, dass** die Magnetanordnung relativ zu den mäanderförmig ausgebildeten HF-Spulenanordnungen (SP1, SP2) derart angeordnet ist, dass für einen Winkel β, der zwischen dem Magnetfeld und den Mäanderrichtungen beider HF-Spulenanordnungen (SP1, SP2) eingeschlossen ist, gilt: entweder

a)

$$\beta = 90° \pm \alpha/2$$

oder
b)

$$\beta = \pm \alpha/2.$$

9. Ultraschallprüfkopf nach einem der Ansprüche 1 bis 8,
**dadurch gekennzeichnet, dass** für den spitzen Winkel α gilt: 0° < α < 90°, vorzugsweise 0° < α ≤ 60°, besonders bevorzugt 0° < α ≤ 15°.

10. Verfahren zur zerstörungsfreien Prüfung eines flächig ausgebildeten Prüfkörpers, wie eine Rohrwand, Platte oder ein Blech, mittels Ultraschallplattenwellen, die mittels einer Vielzahl von Ultraschallwandlersegmenten (W) erzeugt und/oder empfangen werden, wobei die Vielzahl von Ultraschallwandlersegmenten (W) einzeln oder in Gruppen mittels Phased-Array Technik zum Aussenden von Ultraschallplattenwellen mit einer vorgebbaren Ausbreitungsrichtung in die und/oder zum Empfangen von Ultraschallplattenwellen unter einer vorgegebenen Ausbreitungsrichtung aus der zu prüfenden Prüfkörperwand (3) angesteuert werden **dadurch gekennzeichnet, dass** von einer Vielzahl längs einer gemeinsamen Ebene, zeilenförmig nebeneinander angeordneten und einem gleichen Halbraum zugewandten, in wenigstens zwei Segmentteilen (WS1, WS2) geteilten Ultraschallwandlersegmenten (W) jeweils wenigstens zwei separate, in räumliche Überlagerung miteinander tretende Ultraschallplattenwellenfelder (2, 2') zeitgleich ausgesendet und/oder empfangen werden, denen jeweils eine Hauptausbreitungsrichtung (H1, H2) zuordenbar ist, die miteinander einen spitzen Winkel α derart einschließen, dass sich die wenigstens zwei separaten Ultraschall-Plattenwellenfelder (2, 2') zu einem Ultraschall-Plattenwellenfeld mit einem Divergenzwinkel überlagern, der größer ist als ein Divergenzwinkel (w') eines Ultraschallwellenfeldes, das von einem nicht geteilten Ultraschallwandlersegment (W) ausgehen würde.

## Claims

1. An ultrasonic probe for the nondestructive testing of a planar test specimen, preferably a test specimen wall (3), such as pipe or slab walls or a plate, which provides a plurality of ultrasonic transducer segments (W), which are activatable individually or in groups by means of phased array technology for the emission of ultrasonic plate waves (2, 2') having a predefinable propagation direction in the test specimen wall (3) to be tested, **characterized in that** the ultrasonic transducer segment (W) each consists of at least two segment parts (WS1, WS2) each having an outlet aperture, that via each of the outlet apertures of the at least two segment parts (WS1, WS2) an ultrasonic plate wave field (2, 2') can be emitted, that the at least two segment parts (WS1, WS2) per ultrasonic transducer segment each are activatable jointly and simultaneously by means of the phased array technology, and that the ultrasonic transducer segments (W) are arranged along a common plane in such a manner in a line-shaped arrangement adjacent to one another that the outlet apertures assignable to the ultrasonic transducer segments (W) face toward the same half space and the ultrasonic plate wave fields (2, 2') assignable to the at least two segment parts (WS1, WS2) mutually overlap and each have a main propagation direction, which enclose an acute angle α in projection on the plane in such a manner that the ultrasonic plate wave fields (2, 2') generated by the at least two segment parts (WS1, WS2) superimpose to form an ultrasonic plate wave field having a divergence angle, which is greater than a divergence angle (w') of an ultrasonic wave field which would originate from a non-divided ultrasonic transducer segment (W).

2. The ultrasonic probe according to Claim 1, **characterized in that** the at least two segment parts (WS1, WS2), which each have a segment longitudinal extension, are implemented as structurally identical and are arranged adjacent to one another and spatially separate in the plane in such a manner that the segment longitudinal extensions of the respective two segment parts (WS1, WS2) enclose the angle α.

3. The ultrasonic probe according to Claim 1 or 2, **characterized in that** the ultrasonic transducer segments (W) are implemented for the emission and/or reception of ultrasonic plate waves.

4. The ultrasonic probe according to one of Claims 1 to 3, **characterized in that** the ultrasonic transducer segments (W) comprise piezoelectric material for the ultrasonic transduction, that the at least two segment parts (WS1, WS2) each provide a transducer body, which consists of piezoelectric material, having a body longitudinal extension, and that a wedge-shaped coupling element each is provided via which the transducer body can be applied to the test specimen wall (3), and the body longitudinal extensions of both transducer bodies enclose the acute angle α.

5. The ultrasonic probe according to one of Claims 1 to 3, **characterized in that** the ultrasonic transducer segments (W) are implemented as electromagnetic ultrasonic transducers (EMUS).

6. The ultrasonic probe according to Claim 5, **characterized in that** the at least two segment parts (WS1, WS2) each comprise a permanent magnet arrangement, which consists of a plurality of individual bar magnets joined directly to one another in the form of a stack, each having magnetic poles alternating in the stack direction, that an HF coil arrangement (HF1, HF2), which are each connected in series, is assigned to each of the permanent magnet arrangements, and the stack directions of both permanent magnet arrangements enclose the acute angle α.

7. The ultrasonic probe according to Claim 5, **characterized in that** the at least two segment parts (WS1, WS2) each provide a meandering HF coil arrangement (SP1, SP2), having a plurality of coil loops arranged along a meandering direction, that the meandering directions of both HF coil arrangements (SP1, SP2) enclose the acute angle α, that the HF coil arrangements (SP1, SP2) of both segment parts (WS1, WS2) are connected in series or in parallel, and that a magnet arrangement is arranged to apply a stationary or quasi-stationary magnetic field, which is oriented parallel to the surface of the test specimen wall (3), at the location of the meandering HF coil arrangements (SP1, SP2).

8. The ultrasonic probe according to Claim 7, **characterized in that** the magnetic arrangement is arranged relative to the meandering HF coil arrangements (SP1, SP2) in such a manner that for an angle β, which is enclosed between the magnetic field and the meandering directions of both HF coil arrangements (SP1, SP2): either equation

a)

$$\beta = 90° \pm \alpha/2$$

or

b)

$$\beta = \pm \alpha/2 \text{ applies.}$$

9. The ultrasonic probe according to one of Claims 1 to 8,
**characterized in that** for the acute angle $\alpha$: $0° < \alpha < 90°$, preferably $0° < \alpha \leq 60°$, particularly preferably $0° < \alpha \leq 15°$.

10. A method for the nondestructive testing of a planar test specimen wall, such as a pipe wall, a slab or a plate, by means of ultrasonic plate waves, which are generated and/or received by means of a plurality of ultrasonic transducer segments (W), the plurality of ultrasonic transducer segments (W) being activated individually or in groups by means of phased array technology for the emission of ultrasonic plate waves at a predefinable propagation direction into the test specimen wall (3) and/or for receiving ultrasonic plate waves at a predefined propagation direction from the test specimen wall (3) to be tested
**characterized in that**, by each of a plurality of ultrasonic transducer segments (W) which are arranged along a common plane in a line-shaped arrangement adjacent to one another and facing toward the same half space and which are divided in at least two segment parts (WS1, WS2), at least two separate ultrasonic plate wave fields (2, 2'), which come into spatial superposition with one another, are emitted and/or received at the same time, to each of which a main propagation direction (H1, H2) is assignable, which enclose an acute angle $\alpha$ with one another in such a manner that the at least two separate ultrasonic plate wave fields (2, 2') superimpose to form an ultrasonic plate wave field having a divergence angle, which is greater than a divergence angle (w') of an ultrasonic wave field which would originate from a non-divided ultrasonic transducer segment (W).

**Revendications**

1. Tête de contrôle par ultrasons, pour le contrôle non destructif d'un échantillon conçu sous forme plane, de préférence d'une paroi d'échantillon (3), comme des parois de tubes ou des parois de plaques ou une tôle, qui prévoit une pluralité de segments de transducteur à ultrasons (W), qui sont susceptibles d'être amorcés individuellement ou en groupes par technique de réseau en phase, pour émettre des ondes de Lamb à ultrasons (2, 2') dans une direction de propagation prédéfinissable dans la paroi d'échantillon (3) qui doit être contrôlée,
**caractérisée en ce que** les segments de transducteur à ultrasons (W) sont constitués respectivement d'au moins deux parties de segment (WS1, WS2) avec respectivement une ouverture de sortie,
**en ce qu'**au-dessus des ouvertures de sortie des au moins deux parties de segment (WS1, WS2) est susceptible d'être diffusé respectivement un champ d'ondes de Lamb à ultrasons (2, 2'),
**en ce que** les au moins deux parties de segment (WS1, WS2) par segment de transducteur à ultrasons sont susceptibles d'être amorcées conjointement et simultanément, respectivement par voie de la technique de réseau en phase, et **en ce que** les segments de transducteur à ultrasons (W) sont placés le long d'un plan commun, côté à côte en forme de lignes, de telle sorte que les ouvertures de sortie susceptibles d'être associées aux segments de transducteur à ultrasons (W) soient dirigées vers un même demi-espace et que les champs d'ondes de Lamb à ultrasons (2, 2') susceptibles d'être associés aux au moins deux parties de segment (WS1, WS2) se chevauchent mutuellement et détiennent respectivement une direction de propagation principale, qui en projection sur le plan incluent un angle aigu $\alpha$, de telle sorte que les champs d'ondes de Lamb à ultrasons (2, 2') générés par les au moins deux parties de segment (WS1, WS2) se chevauchent en un champ d'ondes de Lamb à ultrasons avec un angle de divergence qui est supérieur à un angle de divergence (w') d'un champ d'ondes de Lamb à ultrasons qui partirait d'un segment de transducteur à ultrasons (W) non divisé.

2. Tête de contrôle par ultrasons selon la revendication 1,
**caractérisée en ce que** les au moins deux parties de segment (WS1, WS2), qui disposent respectivement d'une extension longitudinale de segment sont de construction identique et séparées côte à côte dans le plan en étant séparées dans l'espace, de telle sorte que l'extension longitudinale de segment respectivement des deux parties de segment (WS1, WS2) inclue l'angle a.

3. Tête de contrôle par ultrasons selon la revendication 1 ou 2,
**caractérisée en ce que** les segments de transducteur à ultrasons (W) sont conçus pour émettre et / ou pour réceptionner des ondes de Lamb à ultrasons.

4. Tête de contrôle par ultrasons selon l'une quelconque des revendications 1 à 3,
**caractérisée en ce que** les segments de transducteur à ultrasons (W) comportent une matière piézoélectrique pour la conversion ultrasonore,
**en ce que** les au moins deux parties de segment (WS1, WS2) prévoient respectivement un élément convertisseur constitué d'une matière piézoélectrique avec une extension longitudinale d'élément, et **en ce que** respectivement un élément de couplage en forme de clavette est présent, par l'intermédiaire duquel l'élément convertisseur peut être appliqué sur la paroi d'échantillon (3), et **en ce que** l'extension longitudinale d'élément des deux éléments convertisseurs inclut l'angle aigu a.

5. Tête de contrôle par ultrasons selon l'une quelconque des revendications 1 à 3, **caractérisée en ce que** les segments de transducteur à ultrasons (W) sont conçus sous la forme de convertisseurs électromagnétiques d'ultrasons (EMUS).

6. Tête de contrôle par ultrasons selon la revendication 5, **caractérisée en ce que** les au moins deux parties de segment (WS1, WS2) comportent respectivement un agencement d'aimants permanents qui est constitué d'une pluralité de barreaux aimantés individuels directement joints les uns aux autres en forme de pile avec respectivement des pôles magnétiques alternés dans la direction d'empilage, **en ce qu'**aux agencements d'aimants permanents est associé respectivement un agencement de bobines HF (HF1, HF2) qui sont respectivement interconnectées en série et **en ce que** les directions d'empilage des deux agencements d'aimants permanents incluent l'angle aigu a.

7. Tête de contrôle par ultrasons selon la revendication 5, **caractérisée en ce que** les au moins deux parties de segment (WS1, WS2) prévoient respectivement un agencement de bobines HF (SP1, SP2) conçu en forme de méandres, avec une pluralité d'enroulements de bobine placés le long d'une direction des méandres, **en ce que** les directions des méandres des deux agencements de bobines HF (SP1, SP2) incluent l'angle aigu $\alpha$, **en ce que** les agencements de bobines HF (SP1, SP2) des deux parties de segment (WS1, WS2) sont interconnectés en série ou en parallèle, et **en ce qu'**un agencement d'aimants destiné à créer un champ magnétique stationnaire ou quasi-stationnaire, orienté à la parallèle de la surface de la paroi d'échantillon (3) est placé à l'endroit des agencements de bobines HF (SP1, SP2) conçus en forme de méandres.

8. Tête de contrôle par ultrasons selon la revendication 7, **caractérisée en ce que** l'agencement d'aimants est placé en rapport aux agencements de bobines HF (SP1, SP2) conçus en forme de méandres de telle sorte que pour un angle $\beta$, qui est inclus entre le champ magnétique et les directions des méandres des deux agencements de bobines HF (SP1, SP2), on applique : soit

a)

$$\beta = 90° \pm a/2$$

ou

b)

$$\beta = \pm \alpha/2.$$

9. Tête de contrôle par ultrasons selon l'une quelconque des revendications 1 à 8, **caractérisée en ce que** pour l'angle aigu $\alpha$, on applique : $0° < \alpha < 90°$, de préférence $0° < \alpha \le 60°$, de manière particulièrement préférentielle $0° < \alpha \le 15°$.

10. Procédé, destiné au contrôle non destructif d'un échantillon conçu sous forme plane, comme une paroi de tube, une plaque ou une tôle, au moyen d'ondes de Lamb à ultrasons, qui sont générées et/ou réceptionnées au moyen d'une pluralité de segments de transducteur à ultrasons (W), la pluralité de segments de transducteur à ultrasons (W) étant amorcés individuellement ou en groupes par technique de réseau en phase, pour émettre des ondes de Lamb à ultrasons dans une direction de propagation prédéfinissable dans la paroi d'échantillon (3) qui doit être contrôlée et/ou pour réceptionner des ondes de Lamb à ultrasons dans une direction de propagation prédéfinie à partir de celle-ci, **caractérisée en ce qu'**à partir d'une pluralité de segments de transducteur à ultrasons (W) placés le long d'un plan commun, côte à côte en forme de lignes, et dirigés vers un même demi-espace, divisés en au moins deux parties de segment (WS1, WS2) sont émis et/ou réceptionnés simultanément respectivement deux champs d'ondes de Lamb à ultrasons (2, 2') séparés, entrant en chevauchement respectif dans l'espace, auxquels est susceptible d'être associée respectivement une direction de propagation principale (H1, H2), qui incluent ensemble un angle aigu $\alpha$ de telle sorte que les au moins deux champs d'ondes de Lamb à ultrasons (2, 2') séparés se chevauchent en un champ d'onde de Lamb à ultrasons avec un angle de divergence qui est supérieur à un angle de divergence (w') d'un champ d'ondes de Lamb qui partirait d'un segment de transducteur à ultrasons (W) non divisé.

a)

b)

**Fig. 1**

**2'**   **2'**

**A1**   **A2**

**W1**   a   **W2**

1.Hälfte   2.Hälfte

**WS1**   **WS2**

α

a)

**P1**   **P2**   **P3**   **P4**   b)

Fig. 2

SR1=H1    SR2=H2

WS1    WS2

HF1    HF2

α

P

Fig. 3

M1=H1    M2=H2

M

N

SP1    SP2

α

a)

Fig. 4

M1=H1    M2=H2

S

M

N

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004063482 B3
- DE 102004053584 A1
- DE 102008002394 A1
- US 4576045 A

**In der Beschreibung aufgeführte Nicht-Patentliteratur**

- **P. WILCOX ; M. LOWE ; P. CAWLEY.** Lamb and SH Wave Transducer Arrays for the Inspection of Large Areas of Thick Plates. *Review of Progress in QNDE,* 2000, vol. 19, 1049-1056